# EUROPEAN PATENT APPLICATION

(11) **EP 3 672 357 A1**
(43) Date of publication of application: **24.06.2020**
(21) Application number: 18382952.2
(22) Date of filing: 20.12.2018
(51) Int. Cl.: H04W 84/18

(54) **METHOD OF COMMUNICATION THROUGH THE BLE PROTOCOL WITH EXTENDED COMMUNICATION RANGE**

(71) Applicant: Baintex Technologies, S.L., 46980 Paterna (Valencia) (ES)
(72) Inventor: Esteve Esteve, José Miguel, 46980 Paterna (ES); Escriche Izquierdo, Carlos, 46980 Paterna (ES); Sendra Estrella, Alberto, 46980 Paterna (ES)
(74) Representative: Sahuquillo Huerta, Jesús

(57) **Abstract**

A computer-implemented method of communication using the BLE protocol with an extended communication range in a network that comprises a plurality of master devices (M1...Mn), multiple slave devices (E1...En) and at least one server; and where the method is characterised because it comprises the stages of: (a) sending a broadcast BLE packet from a slave device (E1...En) to all master devices (M1...Mn); (b) sending to a server from the master devices (M1 ...Mn) the packet received from the slave devices (E1...En) together with a signal strength indicator received; (c) analysing on the server the packet received along with the signal strength indicator received from each master device (M1...Mn); and (d) selecting the optimum communication path between the server and the broadcasting slave device (E1...En) of the broadcast BLE packet, where this optimal route is the best indicator of the force of the signal received from each master device (M1...Mn) obtained, notifying all devices of the BLE network.

## Description

A purpose of this invention is a method and a system for improving the BLE (Bluetooth Low Energy) protocol, particularly when a high number of devices are communicating. This invention refers to a method of communication that allows for expanded range of communication (i.e. the distance at which they can communicate) of two devices connected to a BLE network.

### PRIOR ART

The BLUETOOTH LOW ENERGY protocol (hereinafter simply BLE) is the main feature of version 4.0 of the BT (Bluetooth) spec core. This version was introduced in June 2010 by the Bluetooth special interest group (SIG). Despite being based on BT Classic, the BLE protocol is a wireless technology designed to cover purposes not covered by its predecessor. The main objective of this protocol is to design a radio standard with the lowest energy consumption possible, especially optimised for low cost, low bandwidth, low power and equally low complexity.

The BLE protocol facilitates short-range communications between devices that do not require large data transfers, with the main idea of providing an efficient technology for monitoring and controlling applications where data amounts are typically very low, such as sending sensor values or control messages.

The BLE network topology is star-type. Master devices can have multiple link-layer connections with peripherals (slave devices) and simultaneously perform searches for other devices. On the other hand, a slave role device can only have one link-layer connection with a single master. In addition, a device can send data in broadcast mode, advertising events, without waiting for any connection. This allows you to send data to the devices in scanning state without having to establish the master-slave connection.

For the device management, connection and application interface BT's SIG defines a stack of protocols. The BLE protocol stack is divided into three basic parts: Controller, Host and Applications. The controller is the physical device that allows one to transmit and receive radio signals and to interpret them as data packets. It contains the physical layer, the Direct Test Mode, the Link Layer and the Host Controller Interface.

The host is the software stack that manages while two or more devices communicate with each other. No superior interface is defined for the host; each operating system or environment has its own way of exposing host APIs (Application Programming Interface) for developers. This part of the stack contains a layer of logical link control and adaptation protocol, security manager, attribute protocol (ATT), generic attribute profile (GATT) and generic access profile (GAP). For each use case, applications use the software stack, which in turn uses the driver.

Bluetooth Low Energy shares some similarities with classic Bluetooth. Both use a 2.4 GHz band. Classic Bluetooth and BLE use the GFSK to 1Mbps modulation, but with different modulation indices. Enhanced Data Rate (EDR) uses a completely different modulation from GFSK. The classic Bluetooth standard has 79 channels while BLE has 40, as indicated in table 1.1. The separation between channels is also different. Because of these two differences between BLE and classic Bluetooth, they are incompatible with each other, so they cannot communicate. However, there are Dual Mode devices that support both technologies by switching the modulation parameters and channels where they are radiating.

These three Advertising channels are strategically located to avoid interference caused by other technologies that coexist in the same spectrum (IEEE 802 and ZigBee). In addition, in connection state, BLE uses the Frequency Hopping Spread Spectrum (FHSS) technique to reduce interference.

BLE uses a Gaussian modulation with frequency displacement. This uses two frequencies to identify the '1' or '0' bit. The Gaussian filter is used to soften transitions between frequencies and to reduce the widening spectrum caused by the ISI. The BLE specification [3] limits the maximum transmitted power to +10 dBm and the minimum to -20 dBm. The minimum received sensitivity required for BLE is -70 dBm, although most BLE devices have a sensitivity less than -85dBm.

The link layer is the layer responsible for the states of Advertising, Scanning and creating and maintaining connections. It is also responsible for the structure of the packets. The BLE protocol defines a series of operating modes. So, in the Standby mode the device neither transmits nor receives. In general, this state is associated with a sleeper system to conserve energy.

In the advertising mode, the device that has the peripheral role enters the Advertising state in which it sends Advertising packets in the advertising channels. In this state it also hears any response (request) of the packets from the central device. This mode is one of the most critical to analyse from a power point of view because the peripheral device will take an Advertising time more or less, depending on the application. It is necessary to consider that the transmission time affects energy consumption; therefore, the Advertising range directly affects the power consumption and the life of the batteries.

The Scanning mode refers to listening to Advertising packets sent through its channels. This mode is used to explore devices. In initiating mode, it is the state that the central device enters (master) before switching to connection status. The central device listens to the Advertising of peripherals, but once it receives the Advertising of the desired peripheral, the central device must connect by sending the correct data. For the Slave, the Advertising state is also considered an initial state before the connection state. The connection state is the last state in which the Slave (peripheral) and Master (Central) can exchange data. They exchange data periodically through connection events.

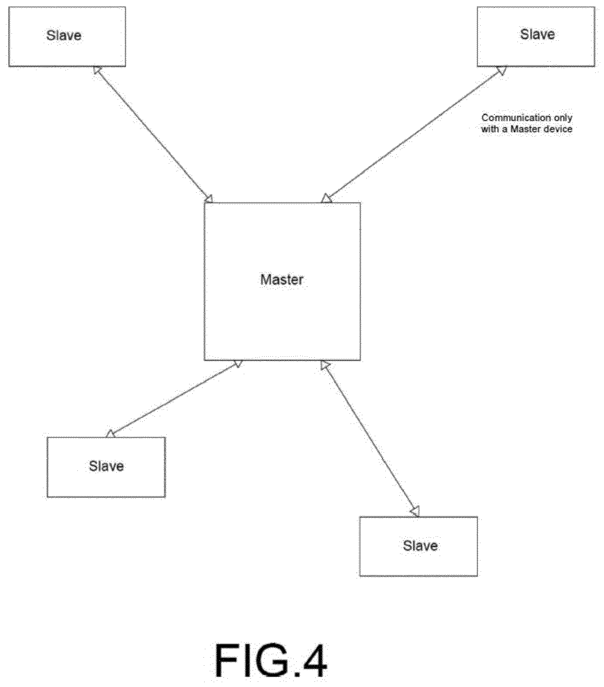

So far, the main elements that make up the BLE protocol have been described in a schematic way. Examples of documents that describe some aspects of the BLE protocol are, for example, documents US2018176776, US2018091932, US2017325161, or EP2999297. The traditional method of communication in standard BLE uses a topology with multiple slave devices. Thus, it is not possible to communicate a slave device with multiple master devices. The traditional topology is shown in figure 4, where each slave device (E1...En) communicates with a single master device (M1).

### EXPLANATION OF THE INVENTION

A purpose of this invention is to establish a communication protocol configured to send data packets from a master device to a slave device through multiple repetitive devices. Both repeater devices replicate messages in order to reach points without BLE coverage, which is an improvement of known systems in the state of the art and used so far. This purpose is achieved with the method of claim 1. In other claims dependent on it, particular or preferred realisations of the invention are described.

More specifically, and thanks to this invention, a slave device can be connected to multiple master devices. The invention analyses the power of the signal received on each master device to decide which is the optimal route of communication with each device. It also allows for fault tolerance of a master device and re-route the packets to another master device nearby.

The method of the invention for the selection of the optimal route in multimaster network topologies comprises each predefined regular time period "t":
(a) A BLE device -configured as a slave -sends a broadcast packet to all devices set as master on the BLE network;
(b) The master devices receiving the packet are sent to a server along with information about the Received Signal Strength Indicator (RSSI).
(c) The server analyses the information contained in each packet and selects an optimal communication route choosing the best RSSI (i.e. where an RSSI signal of -50 is better than an RSSI signal of -70, for example).
(d) The server saves the optimal path and notifies the other nodes -devices- of the BLE network.

Finally it is important to note that the optimal route is optimal exclusively for that moment of time "t". However, for a period of time "t + 1" the indicated process will be repeated (stages (a)-(d)) and a new optimal route will be selected that can coincide, or not, with the optimal route set for the previous instant of time.

Using repeater devices -nodes- and a multimaster topology it is possible to move from traditional star topology (figure 4) to a mesh-type network topology. This topology will have the advantage of reducing the risk of failures and errors in communication because there would not be a single route to establish a communication between a teacher and a slave within the BLE network.

Throughout the description and claims the word "understands" and its variants are not intended to exclude other technical characteristics, additives, components or steps. For experts in the field, other objects, advantages and characteristics of the invention will be gathered partly from the description and partly from the use of the invention. The following examples and drawings are provided as an illustration and are not intended to restrict this invention. In addition, this invention covers all possible combinations of particular and preferred realisations indicated herein.

### BRIEF DESCRIPTION OF THE FIGURES

Below a series of drawings are briefly described that help to better understand the invention and are explicitly related to a realisation of such an invention that is presented as a non-limiting example thereof.
FIG 1. Shows a diagram of the portable electronic device that implements this invention.
FIG 2. Shows the diagram of an architecture of a computer system that illustrates the architecture of a server used in the different practical realisations of the invention.
FIG 3. Shows the diagram of a network architecture that illustrates an illustrative operating environment for the different practical realisations of the invention.
FIG 4. Shows a traditional topology of a BLE star network.
FIG 5. Shows a diagram with the network architecture that illustrates an operating environment of the method according to the invention herein.
FIG 6. Shows the communications diagram according to the method object of this invention.
FIG 7. Shows a practical example of optimizing the communication route in accordance with the method object of this invention.

### DETAILED EXPLANATION OF ONE MODE OF REALISATION OF THE INVENTION

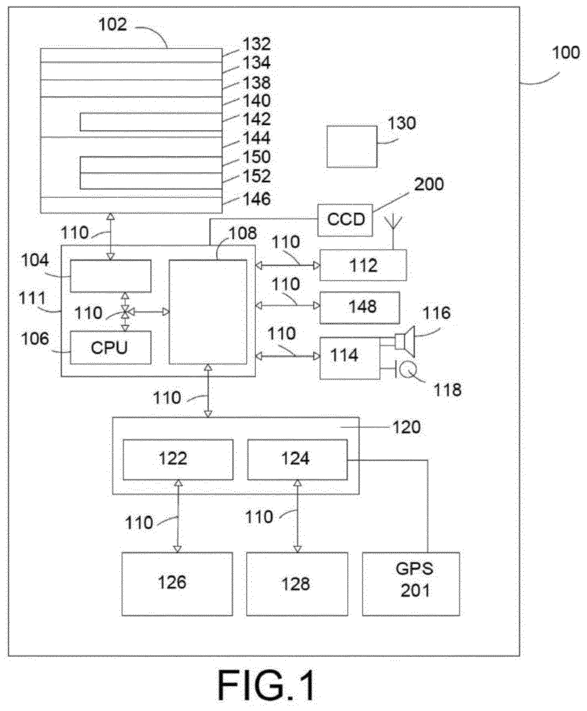

This invention is implemented on a portable electronic device 100 that can be any selected among computers, tablets and mobile phones, although a preferred architecture for a mobile device is shown in figure 1. In general, any programmable communications device can be configured as a device for this invention.

Figure 1 illustrates a portable electronic device, based on certain realisations of the invention. The portable electronic device 100 of the invention includes a memory 102, a memory controller 104, one or more processing units (CPU) 106, a peripheral interface 108, a RF circuit system 112, an audio circuit system 114, a loudspeaker 116, a microphone 118, a input/output subsystem (I/O) 120, a touch screen 126, other input 128 or monitoring devices and an external port 148. These components communicate with each other on one or more communication buses or signal lines 110. The device 100 can be any portable electronic device, including, but not limited to, a laptop, a tablet, a mobile phone, a multimedia player, a personal digital assistant (PDA), or similar device, including a combination of two or more of these items. It should be observed that the device 100 is only one example of a portable electronic device 100 and that the device 100 may have more or fewer components than those displayed or a different configuration of components. Both different components shown in figure 1 can be deployed in hardware, software, or a combination of both, including one or more integrated circuits of specific application and/or signal processing. Likewise, the screen 126 is defined as touch, although the invention can also be implemented on devices with a standard screen.

The memory 102 may include a high-speed random-access memory and may also include non-volatile memory, such as one or more magnetic disk storage devices, flash memory devices or other non-volatile solid-state memory devices. In some realisations, the memory 102 may also include remote storage with respect to one or more processors 106, such as a storage connected to a network that is accessed through the RF circuits system 112 or external port 148 and a communications network (not shown) such as the Internet, intranet(s), local area networks (LANs), extended local area networks (WLAN), storage area networks (SAN), and so forth, or any of their appropriate combinations. Access to memory 102 by other components of the device 100, such as the CPU 106 and the peripherals interface 108, can be controlled by the memory controller 104.

The peripherals interface 108 connects the device's input and output peripherals to the CPU 106 and the memory 102. One or more processors 106 run different software programs and/or instruction sets stored in memory 102 to perform the different functions of the device 100 and for data processing.

In some realisations, the peripheral interface 108, the CPU 106, and the memory controller 104 can be deployed on a single chip, such as a chip 111. In certain other realisations they can be implemented on multiple chips.

The RF (radio frequency) circuit system 112 receives and sends electromagnetic waves. The RF circuit system 112 converts electrical signals into electromagnetic waves and vice versa and communicates with communications networks and other communications devices through electromagnetic waves. The RF circuit system 112 can include a system of circuits widely Known for performing these functions, including but not limited to, an antenna system, an RF transceiver, one or more amplifiers, a tuner, one or more oscillators, a digital signal processor, a CODEC chip set, a subscriber identity module card (SIM), a memory, or any other. The RF circuit system 112 can communicate with networks, such as the Internet, also known as the World Wide Web (WWW), an Intranet and/or a wireless network, such as a cellular telephone network, a wireless local area network (LAN) and/or a metropolitan area network (MAN) and with other devices using wireless communication. Wireless communication can use any of multiple communications standards, protocols and technologies, including, but not limited to, the global system for mobile communication (GSM), the enhanced data GSM environment (EDGE), wideband code division multiple access (W-CDMA), code division multiple access (CDMA), time division multiple access (TDMA), Bluetooth (particularly Bluetooth 4.0), wireless access (Wi-Fi under protocols, for example, IEEE 802.11 a, IEEEM802.11b, IEEE 802.11g and/or IEEE 802.11n), Voice over IP protocol (VoIP), Wi-MAX, a protocol for e-mail, instant messaging and/or short message service (SMS) or any other appropriate communication protocol, including communication protocols not yet developed on the date of presentation of this document.

The audio circuit system 114, the loudspeaker 116 and the microphone 118 provide an audio interface between a user and the device 100. The audio circuit system 114 receives audio data from the peripherals interface 108, converts the audio data to an electrical signal and transmits the electrical signal to the loudspeaker 116. The loudspeaker converts the electrical signal to sound waves that are audible for human beings. The audio circuit system 114 also receives electrical signals converted by microphone 116 from sound waves. The audio circuits system 114 converts the electrical signal into audio data and transmits the audio data to the peripherals interface 108 for processing. Audio data can be recovered and/or transmitted to the memory 102 and/or the RF circuit system 112 via the peripherals interface 108. In some realisations, the audio circuit system 114 also includes a headphone connection (not shown). The headphone connection provides an interface between the audio circuit system 114 and removable audio input/output peripherals, such as output-only or both output earphones (earphones for one or both ears) and input earphones (microphone).

The I/O subsystem 120 provides the interface between the input/output peripherals of the device 100, such as the touch screen 126 and other input/control devices 128, and the peripheral interface 108. The I/O subsystem 120 includes a touchscreen controller 122 and one or more input controllers 124 for other input or control devices. The input controller (2) 124 receive /send electrical signals to/from other input or control devices 128. The other input/control devices 128 may include physical buttons (e.g. push buttons, toggle buttons, etc.), dials, slide switches, and/or geographic location media 201, such as GPS or equivalent.

The touch screen 126 in this practical realisation provides both an output interface and an input interface between the device and a user. The touch screen controller 122 receives/sends electrical signals to/from touch screen 126. The touch screen 126 displays the user's visual output. The visual output can include text, graphics, video and any combination thereof. Part or all of the visual output can be matched with UI objects, the additional details of which are later described.

The touch screen 126 also accepts user inputs based on haptic or touch contact. The touch screen 126 forms a contact-sensitive surface that accepts the user's inputs. The touch screen 126 and the touch screen controller 122 (along with any of the associated modules and/or sets of memory instructions 102) detects contact (and any movement or loss of contact) on the touch screen 126 and converts the detected contact into interaction with UI objects, such as one or more programmable keys that are displayed on the touchscreen. In a realisation as an example, a contact point between the touch screen 126 and the user corresponds to one or more of the user's fingers. key. The touch screen 126 can use LCD (liquid crystal display) technology or LPD (light-emitting polymer display) technology, although other display technologies can be used in other realisations. The touch screen 126 and the touch screen controller 122 can detect contact and any movement or lack of it using any of multiple contact sensitivity technologies, including but not limited to, capacitive, resistive, infrared and surface acoustic wave technologies, as well as other proximity sensor provisions or other elements to determine one or more contact points with the touch screen 126.

The device 100 also includes a power supply system 130 to feed the different components. The power supply system 130 can include an energy management system, one or more power supplies (e.g. batteries, AC), a rechargeable system, a power failure detection circuit, an energy converter or inverter, an energy state indicator (for example, a light-emitting diode (LED)) and any other component associated with power generation, management, and distribution on portable devices.

In some realisations, the software components include an operating system 132, a communication module 134 (or instruction set), a contact/motion module 138 (or instruction set), a graphic module 140 (or instruction set), module 144 (or instruction set) of the state of the user interface and one or more applications 146 (or instruction sets).

The operating system 132 (e.g. iOS, RTXC, LINUX, UNIX, OS X, WINDOWS or an embedded operating system), includes different software components and/or controllers to control and manage general system tasks (e.g. memory management, storage device control, energy management, etc.) and facilitates communication between the different hardware and software components.

The communication module 134 facilitates communication with other devices through one or more external ports 148 and also includes different software components to manage the data received by the RF circuit system 112 and/or external port 148. The external port 148 (for example, a Universal serial bus (USB), FIREWIRE, etc.) is adapted to connect directly to other devices or indirectly over a network (e.g., Internet, wireless LAN, etc.).

The contact/motion module 138 detects contact with the touch screen 126, along with the touch screen controller 122. The contact/motion module 138 includes different software components to perform different operations related to detecting contact with the touch screen 126, such as determining whether the contact has occurred, determining whether there is movement of the contact and keep track of the movement through the touch screen, and determine if the contact has been interrupted (i.e. if the contact has stopped). The determination of the movement of the contact point may include determining the speed (magnitude), velocity (magnitude and direction) and/or acceleration (including magnitude and/or direction) of the point of contact. In some realisations, the contact/motion module 126 and the touch screen controller 122 also detect contact on the touch pad.

The graphic module 140 includes different well-known software components for showing and displaying graphics on the touch screen 126. Note that the term "graphics" includes any object that may be shown to a user, including but not limited to text, web pages, icons (such as user interface objects that include programmable keys), digital images, videos, animations and similar.

In some realisations, the graphic module 140 includes an optical intensity module 142. The optical intensity module 142 controls the optical intensity of graphic objects, such as user interface objects, displayed on the touch screen 126. Optical intensity control may include increasing or decreasing the optical intensity of a graphic object. In some realisations, the increase or decrease can follow predetermined functions.

The user interface status module 144 controls the status of the device's user interface 100. The user interface status 144 can include a locking module 150 and an unlocking module 152. The block module detects the satisfaction of any one or more conditions to transition the device 100 to a locked state in the user interface and transition the device 100 to the locked state. The unlock module detects whether any one or more conditions are met to transition the device 100 to a locked state in the user interface and transition the device 100 to the locked state.

The application(s) 130 may include any application installed on the device 100, including, but not limited to, a browser, address book, contact list, email, instant messaging, word processing, keyboard emulation, graphical objects, JAVA applications, encryption, digital rights management, voice recognition, voice replication, position determination capability (such as that provided by the global positioning system (GPS)), a music player (which plays recorded music stored on one or more files, such as MP3 or AAC files), or any other, including the application object of the invention, as detailed in reference to figure 4 and those that follow.

In some realisations, the 100 device may include one or more optional optical sensors (not shown), such as CMOS or CCD 200 image sensors, for use in imaging applications.

However, the hardware structure indicated is one of those that are possible, and it should be noted that the device 100 can include other image capture elements such as camera, scanner, laser plotter or the combination of any of these types of devices, which can provide the mobile device with the representation of the real environment in video format, image sequence, vector format or any type of combination of the aforementioned formats.

Similarly, the device 100 may include geographic location devices based on GPS positioning satellite networks, geographic location assist devices based on GPS satellite networks and network IP localisation of Internet -AGPS-, geographic localisation devices based on the triangulation of radio signals provided by WIFI antennas and Bluetooth® devices (ISSP), the combination of any of these devices mentioned or any type of device that will provide the mobile device with numerical data about its geographical location.

The device 100 can include any type of element capable of representing real-time images with a minimum of 24 FPS (frames per second) such as TFT, TFT-LED, TFT-OLED, TFT-Retina, the combination of any of the previous ones, in addition to new generation Holo-TFT screens, transparent and micro-projectors or any graphic representation device that can provide the mobile device 100 a way to represent visual content to the user.

The device 100 includes a processor or set of processors that by themselves or in combination with graphic processors such as GPU (Graphics Processing Unit) or APU (Accelerated Processing Unit) can provide the mobile device 100 with the ability to represent, in actual runtime, vector graphics and shaping texturized polygons with these, through vector representation libraries (sets of standardised graphical representation procedures for different platforms) such as OpenGL, DirectX or any type of libraries used for this purpose.

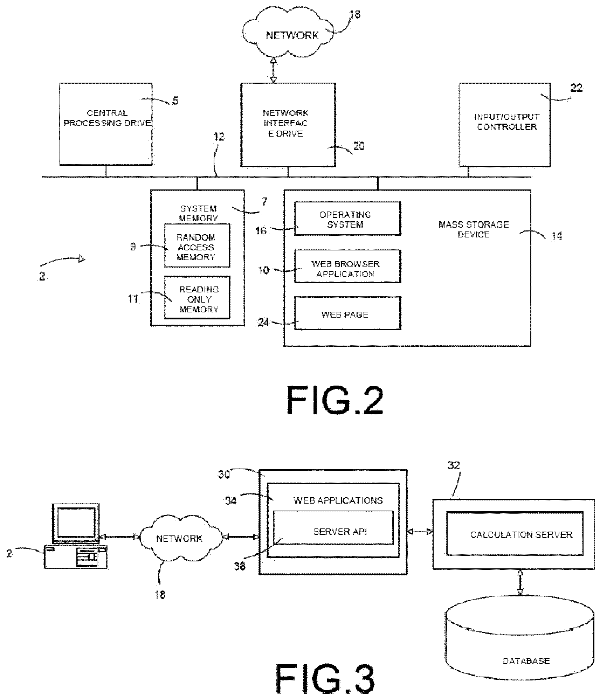

Referencing figures 2 and 3 now and the corresponding description, these are intended to provide a brief, general description of an appropriate computer environment (a server and a personal computer) in which forms of realisation of the invention can be implemented. Although the invention will be described within the general context of program modules running on server computer systems and mobile devices 100, experts in the field may notice that the invention can also be implemented in combination with other types of computer systems and program modules.

Program modules include routines, programs, components, data structures, and other types of structures that perform specific tasks or implement specific abstract data types. This invention can also be put into practice in distributed computing environments where tasks are carried out through remote processing devices that are linked through a communications network. In a distributed computing environment, program modules can be located on both local devices and remote memory storage devices.

With reference to Figure 2 now, an illustrative computer architecture will be described for a computer 2 used in the various forms of realisation of the invention. The computer architecture, shown in Figure 2, illustrates a conventional desktop or notebook computer and can also be used as a server, which includes a central processing unit (CPU) 5, a memory system 7, which includes a random-access memory (RAM) 9 and a read-only memory (ROM) 11, and a bus 12 from the system that attaches memory to CPU 5. A basic input / output system that contains the basic routines that help to transfer information between the elements located on the computer, during startup for example, is stored in the ROM 11. The computer 2 also includes a mass storage device 14 to store an operating system 16, application programs, and other program modules, which will be described in more detail in the following lines.

The mass storage device 14 is connected to CPU 5 using a mass storage driver (not shown) connected to bus 12. The mass storage device 14 and its associated computer-readable media provide non-volatile storage to the computer 2. Although the description of the computer-readable media contained in this report refers to a mass storage device, such as a hard drive or a CD-ROM drive, the experts in the field should know that the computer-readable media can be any media that can be accessed on a computer 2.

Just to give one example, computer-readable media may include computer storage media and other media. Computer storage media include volatile and non-volatile, removable and non-removable media implemented in any storage procedure or technique, such as computer-readable instructions, data structures, program modules, or other data. Computer storage media include, but are not limited to, RAM, ROM, EPROM, EEPROM, flash memory or other solid state memory techniques, CD-ROMs, versatile digital Disks (DVDs) or other optical storage devices, magnetic cassettes, magnetic tapes, storage devices of magnetic discs or other magnetic storage devices or any other media which can be used to store the desired information and which can be accessed using a computer 2.

According to different forms of realisation of the invention, the computer 2 can operate in a networked connection environment using logical connections with computers via a network 18, such as the Internet. The computer 2 can connect to the network 18 through an interface unit 20 with the network connected to the bus 12. It should be pointed out that the network interface 20 can also be used to connect with other types of networks and remote computer systems. The computer 2 can also include an in/out controller 22 for receiving and processing an input from multiple other devices, including a keyboard and an electronic punch (not shown in figure 2). Similarly, an in / out controller 22 can provide an output to a display screen, printer, or other output device type.

As briefly stated above, multiple program modules and data files can be stored in the mass storage device 14 and on the computer 2 RAM 9, including an appropriate operating system 16 for monitoring the operation of the personal computer connected to the network, such as WINDOWS® by the MICROSOFT CORPORATION®, Mac Os X, Linux or Unix. The mass storage device 14 and RAM 9 can also store one or more program modules. In particular, the mass storage device 14 and the 9 RAM can store a web browser application program 10. As experts in the field well know, the web browser application program 10 is operative to request, receive, reproduce and provide interactivity with electronic documents, such as a web page 24 that has been formatted using HTML. Likewise, the web browser application program 10 can be used to run commands contained on the web page 24, such as commands that use the JAVASCRIPT language developed by SUN MICROSYSTEMS, INC. According to one form of realisation of the invention, the web browser application program 10 comprises the web browser application program INTERNET EXPLORER by the MICROSOFT CORPORATION. It should be noted, however, that other web browser application programs from other manufacturers can be used to materialise the various aspects of the invention herein, such as the FIREFOX web browser application by MOZILLA.

In particular, the web page 24 can include an HTML and some directives which, when represented by the web browser application 10, provide a visual representation of a program or programs stored in the computer 2 acting as server 30. Likewise, the directives included in the web page 24 make it possible for a computer user to interact with the representation provided by the web browser application 10 and modify the application 10.

With reference to figure 3 now, an illustrative computer architecture will be described for a computer 2 used in the various forms of realisation of the invention. As shown in figure 3, the computer 2 is connected to a network 18. There is also an applications server 30 connected to the network 18. The applications server 30 comprises a computer of the server which may contain any or all of the conventional computer components described previously in relation to figure 1. Also, the application server 30 is operating to run a web server application to receive and respond to requests related to documents stored in or accessible to the applications server 30. Also, the application server 30 is operational to receive and respond to requests related to the pages generated by a web application 34. It should be appreciated that the web application 34 can understand an executable code on the application server 30, an executable code to communicate with other computers, and may include templates, graphics, audio files, and other content known to experts in the field.

According to another aspect of the invention the web application 34 is operational to provide an interface with a computer user 2 to interact with the programme or programmes covered by this invention and accessible through the network 18. In particular, the web application 34 uses an application programming interface (API) 38 of the server.

As will be discussed in more detail below the computer 2 can transmit a request to the application server 30 to view the work interface of the invention within the context of the web browser application 10. In response to this request, the web application 34 communicates with the server 32 of calculation using the API 38 of the server.

In reference to figure 4, the system implementing the method of this invention comprises a central server (i.e. a computer 2, as described in reference to figures 2 and 3), multiple mobile devices that correspond to different portable electronic devices 100, as described in figure 1, where the mobile devices 100 are configured on a network under the BLE protocol as masters (M1... Mn) of multiple slaves (E1 ...En).

In this invention it is understood that a master device (M1... Mn) can be paired with one or more slaves (E1 ...En) within a single location at the same time. By location, specific geographical locations (for example, building "A") and locations within geographical locations (e.g., room 1, building "A") will be understood.

On the other hand, slave device (E1...En) is defined as any device within a particular location that comprises or integrates a processor and a memory that stores a program or programs that include multiple instructions that, when executed by the processor, make the slave device (E1 ...En) respond to a given instruction received from a master device (M1...Mn) paired with this slave device (E1...En) in a given location (L1...Ln).

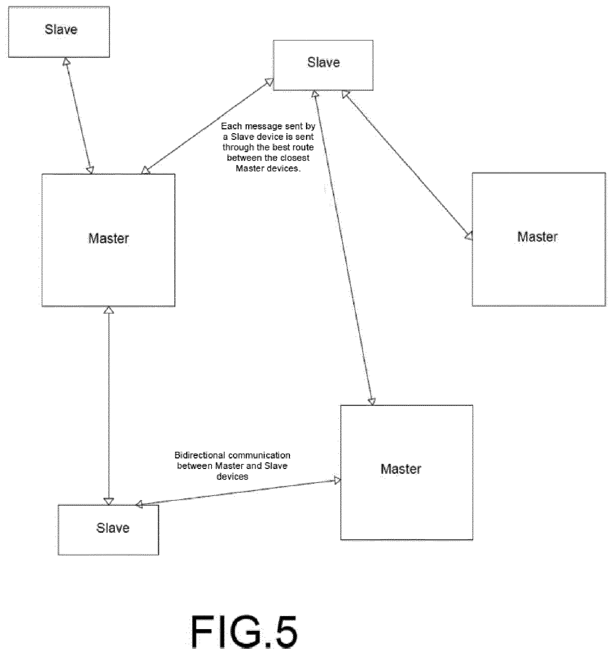

As indicated above, figure 4 shows a traditional star topology, with a single master device (M1) connected to multiple slave devices (E1...En). However, this topology is modified by this invention, establishing a mesh-type topology (figure 5) with a multimaster (M1... Mn) and multi-slave (E1 ...En) structure, establishing a bidirectional communication between at least one master and at least one slave that can be either direct or through other master devices or slaves acting as repeaters, as well as those with a server.

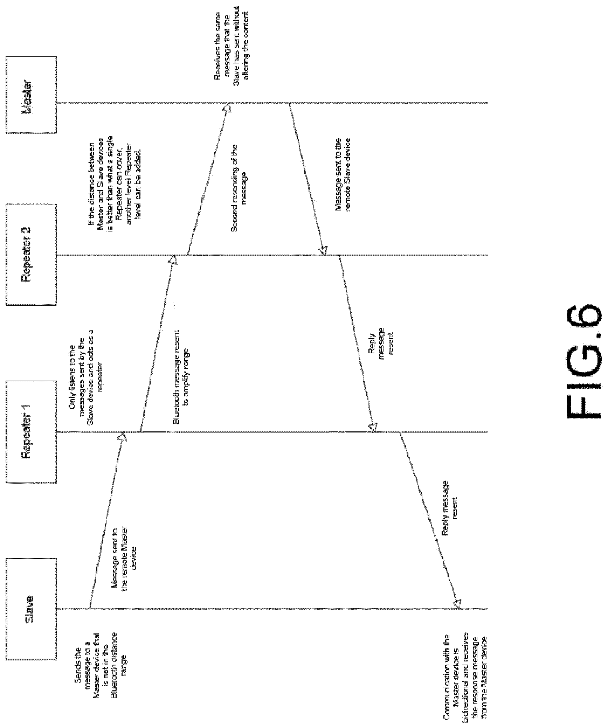

Indeed, as shown in figure 6, a Slave device (E1) sends a message to a master device (M1) that is not within the distance range of the BLE protocol. The repeater R1 (which may be a master or slave device indiscriminately, but only configured as a repeater) listens exclusively - to the message of the E1 slave device.

In the data packet sent by the slave E1 the recipient is identified including its MAC address (Media Access Control) and since the repeater R1 is not the recipient - because the message does not identify its MAC address- it forwards the message within its own range of distance to a second repeater R2, which similarly forwards the message to reach the recipient (master M1), which accepts the message upon identifying its own MAC address in the received packet. Therefore, this message is received and processed, sending a response through the first repeater R1 and the second repeater R2 until it reaches back to the E1 slave that has broadcast the first message.

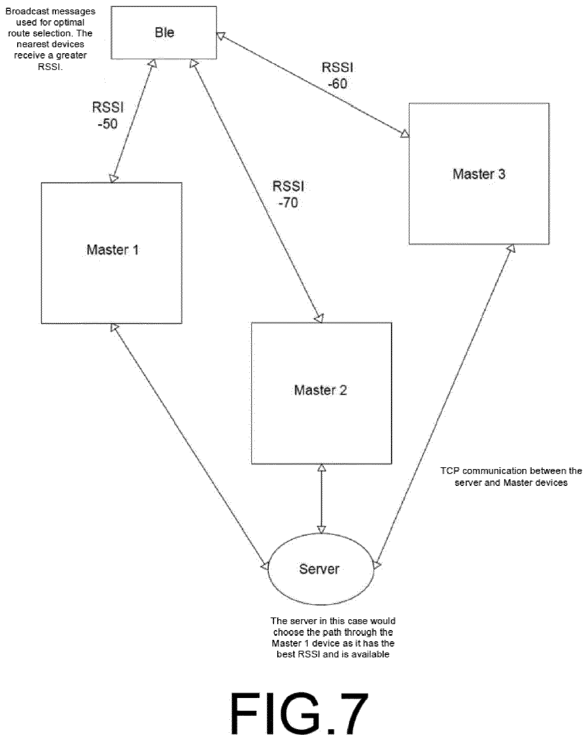

Figure 7 shows how the message's send path is optimised according to this invention. Thus, a slave device BLE (E1) sends a packet in broadcast mode to all master devices (M1...Mn) of the network, including in the packet the RSSI, signal strength indicator received, which in the example of figure 7 is -50 for M1, -70 for M2 and -60 for M3. The value of the RSSI is directly proportional to the physical distance between broadcaster and receiver. The master devices (M1...Mn) communicate via TCP/IP with the server (for example, a computer 2) which, in this particular case, will select the route through the master M1, as it is the one with the best RSSI, and be available at that time, avoiding failures in communication and adapting to each predefined period of time "t" (for example, every five minutes).

## Claims

1. A computer-implemented method of communication using the BLE protocol with an extended communication range in a network that comprises a plurality of master devices (M1... Mn), multiple slave devices (E1 ...En) and at least one server; and where the method is characterised because it comprises the stages of: (a) sending a broadcast BLE packet from a Slave device (E1...En) to all master devices (M1...Mn); (b) sending a to a server from the master devices (M1...Mn) the packet received from the slave devices (E1...En) together with a signal strength indicator received; (c) analysing on the server the packet received along with the signal strength indicator received from each master device (M1...Mn); and (d) selecting the optimum communication path between the server and the slave device (E1...En) broadcasting the BLE broadcast packet, where this optimal route is the best signal strength indicator received from each master device (M1... Mn) obtained, notifying all devices on the BLE network.

2. The method according to claim 1 which repeats each predefined time period.

3. The method according to any of claims 1 or 2 where in the data packet sent by the slave device (E1...En) the recipient master device is identified (M1...Mn) including its MAC address, so that all other master devices or slaves in its range of action that are not identified because the message does not identify their MAC address are configured as repeaters (R1, R2) of the packet received by forwarding the packet to the master device (M1... Mn) whose MAC address is identified in the packet, receiving, processing, and sending a response through the repeater devices (R1, R2) until it reaches back to the slave device (E1...En) that has broadcast the packet.

4. The method according to any of the previous claims where the master device (M1... MN) is a portable electronic device (100).

5. The method according to any of the previous claims where the *slave* device (E1 ...En) is a physical within a particular location that comprises or integrates a processor and a memory that stores a program or programs that include multiple instructions that, when executed by its processor, make the slave device (E1 ...En) respond to a given instruction received from a master device (M1 ...Mn) paired with this slave device (E1 ...En) in a given physical location (L1... Ln) using BLE.

6. The method according to any of the previous claims where the central server (CS) is a computer (2).
